# EUROPEAN PATENT SPECIFICATION

(11) **EP 1 541 426 B1**
(45) Date of publication and mention of the grant of the patent: **18.04.2007**
(21) Application number: 03028354.3
(22) Date of filing: 10.12.2003
(51) Int. Cl.: B60R 21/16, B60R 21/20

(54) **Crash protection device and its method**
Aufprallschutz und dessen Verfahren
Protection de choc et son procédé

(43) Date of publication of application: 15.06.2005
(73) Proprietor: Ford Global Technologies, LLC, Dearborn, MI 48126 (US)
(72) Inventor: Anderzen, Gert, 433 63 Sävedalen (SE)
(74) Representative: Hammond, Andrew David

(56) References cited:
- EP-A- 1 110 825
- DE-A- 10 056 298
- DE-A- 10 115 064
- GB-A- 2 345 669
- US-A- 5 470 103
- US-B1- 6 250 668
- US-B1- 6 467 563

## Description

### Technical field

The present invention relates to a method and an apparatus for the protection of a human inside a car during a crash by means of an inflatable curtain assembly, particularly to prevent the human from becoming hit by structures in a region of a corner formed by a side window and an adjacent windshield during the crash.

### Background of the invention

It is well known in the prior art to provide an air bag assembly and/or including an inflatable air bag for protecting humans seated within the interior of a vehicle. Such inflatable air bags are known to be deployable from a number of different locations at the interior of the vehicle including a steering column, a dashboard, a side door and an interior of the roof line. Such inflatable air bags (air bag is a term used herein also for a bag containing another gas or gas mixture than air) have a number of different configurations and inflation characteristics depending upon the location of deployment and desired function. By way of example, air bag cushions, which are deployable from the steering column and dashboard, are typically inflated and thereafter decompressed as the human to be protected comes into contact with the air bag cushion. Alternatively, it is known to utilize air bags of generally curtain-like configuration deployable from the interior roof line which may remain inflated for an extended period of time so as to provide a cushioning restraint during an extended roll-over event lasting for several seconds.

Air bag assemblies as are known in the prior art typically include a gas generating inflator which is stored in fluid communication with the inflatable air bag cushion. Upon sensing certain predetermined vehicle conditions, such as a certain amount of vehicle deceleration, a sensor sends a signal to the inflator thereby trigging a discharge of the inflation gas into the air bag cushion. As the inflation gas enters the air bag cushion, the air bag cushion is forced into a deployed position for protection of the human within the vehicle.

In the development history of air bag cushions and inflatable curtains many designs have been suggested over the time. In early designs it was disclosed air bags, of one-and-only all purpose design, which were deployed in front of and on the sides of an occupant of the car. However, it has been shown that such air bag cushions would occupy a large volume, whereby it is very difficult to get enough time to trigger, deploy and to control the deployment of such air bag cushions during the short time available in a crash, where the car impacts an object. It must be stated here that large volume air bag cushions cannot be used to prevent an occupant of the car during a collision to get into damaging contact with all kind of stiff structures inside the car due to the mentioned difficulties.

Instead, most designs of human protection means utilizing inflatable devices in cars today include a combination of an air bag cushion in front of a human occupant of the car and inflatable curtains, IC: s, for the prevention of collisions between stiff side structures of the car and parts of the body of a the occupant of the car during a crash.

An example of a prior art design using air bag cushions in front of an occupant in a front seat of the car is disclosed in document US 6 224 088 (D1). In said document, there is further shown an additional air bag cushion being extended between the A-pillars across the windshield of the car to prevent the occupant to hit the upper part of the windshield at a collision.

Document US 6 155 594 (D2) illustrates one embodiment of an inflatable curtain, which in its inflated position covers the side window at the side of a front seat of a car. This inflatable curtain of the illustrated design may be used as a complement to air bag cushions in front of the occupant, whereby the occupant of the front seat is protected both in a frontal and side collision.

There are types of collisions between a car and an object, where the air bag cushions and inflatable curtains according to prior art provide a poor protection for the occupants in a car. This is especially the case if the car hits an object or is hit by an object where the forces of impact are directed along a diagonal of the car. Such situations occur when e. g the car collides with an object, which hits obliquely from the front or obliquely from the back. Other circumstances when such forces may occur are e.g. during a roll over of the car or during a multiple impact collision, where many vehicles may be involved. During all these situations there is a big risk that an occupant of the car may be thrown against the A-pillar of the car and thus be badly hurt at a crash as there is, between frontal air bag cushion assemblies and side inflatable curtains, an area which is poorly protected.

Attempts have been made to provide solutions to take care of this problem and to improve crash protection in the area of the A-pillar. The A-pillar is herein defined as the post situated between the frontal windshield and a side window of the car, at its upper end supporting the car roof and at its lower end connected to the car body. One design to arrive at a solution of the described problem is disclosed in document US 6 543 804 (D3), wherein there is described an elongated air bag for covering the A-pillar of the car in its inflated position. Said disclosed air bag is, in its folded position, stored inside an A-pillar panel.

The elongated air bag of the design as shown in D3 must be packed along the A-pillar to be correctly deployed, when it is inflated. In the D3 solution the air bag is stored inside an A-pillar coating. Thereby many disadvantages arise. First of all, the A-pillar is coated with an A-pillar panel facing the inside of the coupe. Said an A-pillar panel is harder than, for example, roof covering material, whereby it is more difficult for the air bag to penetrate the panel during inflation of the air bag. The positioning of the A-pillar air bag as disclosed is further difficult to control and to locate in a correct position as the deployment time is longer compared to air bag inflation time for air bags located behind e. g. a roof covering. Further, an air bag provided and stored inside the A-pillar is difficult to pack, as there is a minimum of space available. Still another disadvantage is that the A-pillar air bag as disclosed does not provide protection of the area in an interface between side window area and windshield area as discussed above.
Document US 6 250 668 discloses a single side protection airbag for the driver. A single front airbag spans the front seat for protection in frontal impacts. This use of multiple airbags adjacent to the A-pillar does not disclose any cooperation between said single airbags to form a continuous shield.
Document EP 1 110 825 describes a housing and an associated airbag in right and left front corners of a front windscreen of a vehicle. Said airbags nearly form a continuous safety screen across the windscreen when in a deployed state. The airbag is performed as one unit and is designed to be deployed all over the area to be protected at an impact.
Document US 5 470 103 presents a singular inflatable multisection airbag to extend downward in the direction of the heads of the occupants of the seats of a vehicle. Thus, this implies that said airbag will have a big extension when deployed. Any cooperation between different air bag curtains is not disclosed in the document.
Document DE 100 56 298 discloses a singular inflatable airbag covering the whole area of the upper interior of a car after an impact. This also implies that said airbag will have a big extension when deployed. Any cooperation between different separate air bag curtains is not disclosed in the document.
Document GB 2 345 669 describes a car with front airbag between a driver and the windshield according to the preamble of claim 1. Some embodiments further present a strap that contacts a lower lateral part of said airbag, when deployed, to an anchor point close to the ceiling of the car to retain the airbag in a desired position. In a further embodiment, said strap could contain inflatable cells. Still, the reason for the strap is not to protect the occupant of the car from risk of injuries caused by the corner of the compartment in the region of the A-pillar.

For safety reasons there is nowadays a great pressure in car construction technology to make the A-pillar as thin as possible due to highly desired improvements of the visibility from, in particular, the driver's seat. To have a clear view from the driver's seat pushes requests to make the A-pillar thin. To provide vehicle occupant restraint systems in the A-pillar is hereby a solution that should be avoided, if possible, as the width of the A-pillar thus increases.

### SUMMARY OF THE INVENTION

According to a first aspect of the present invention there is presented a device as specified in claim 1.

According to a second aspect of the invention there is presented a method as specified in the independent method claim.

The air curtain assembly as specified in the aspects of the invention above will hence become bent around the corner between the side window and the windshield in its unfolded position during a crash occurrence. Because of this an occupant in the car will be protected from hitting the A-pillar in case of a collision, where the car is hit during a collision in a direction where the passenger is thrown beside, e.g. a front air bag, towards the A-pillar or other structures in said corner. This is a great advantage as air bags and inflatable curtains of present designs do not reliably protect an occupant of a car against said kind of accidents.

By means of the invention a human thus is provided with a protection in case of collisions between body parts and hard structures in the region of said side window, said portion of the windshield and an area there between during the crash. The hard structures includes the occurrence of glass splinter and an intruding foreign object into the compartment in this region.

Another important advantage with the presented solution is that the inflatable curtain does not occupy a space inside the structures forming the A-pillar, whereby the A-pillar and its coverings will be slimmer and thus will not hide the view from especially the driver's seat. The dead angle is possible to minimize.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

Fig. 1 is a top view of a car illustrating the position of the stored inflatable curtain assembly.
Fig. 2 schematically shows the interior of a car compartment illustrating a driver's seat and the corner of the car compartment in the direction to an A-pillar of the car.

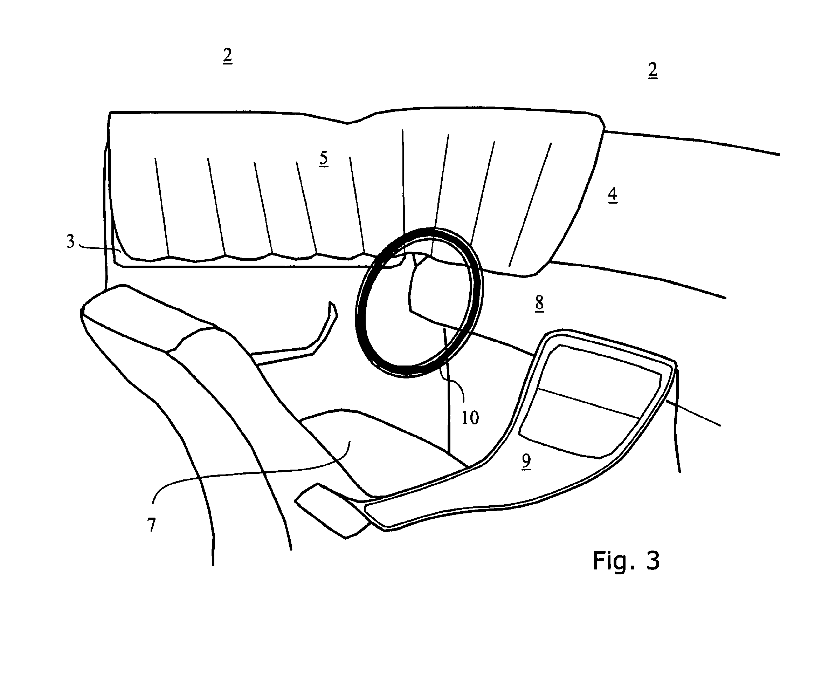

Fig. 3 schematically shows the interior of a car compartment illustrating a driver's seat and the position of the inflatable curtain assembly at the corner of the car compartment in the direction to an A-pillar of the car according to one embodiment of the invention.
Fig. 4 schematically shows an embodiment, wherein the frontal part of a curtain of the assembly is inclined an angle from the upper part of the centre of the windshield to a lower part of the dashboard close to the A-pillar.
Fig. 5 shows an embodiment, wherein the lower part of a curtain of the assembly at the bend of said curtain is attached with a strap to a point on the car body.

### DETAILED DESCRIPTION OF EMBODIMENTS OF THE INVENTION

In the following a number of embodiments of the present invention will be described with support by the enclosed drawings.

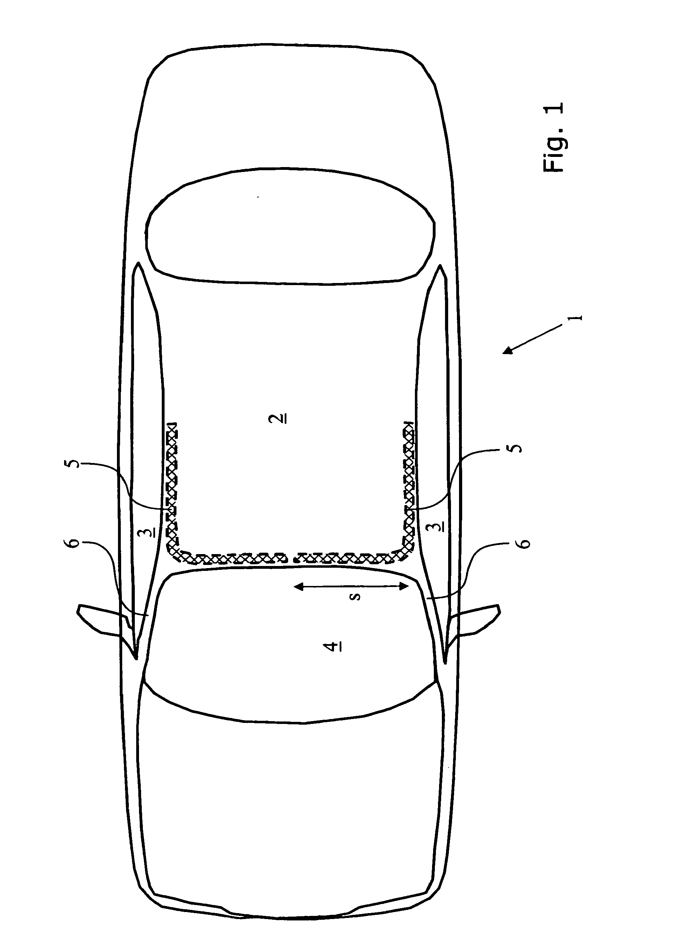

In figure 1 the roof of the car 1 is denoted by the numeral 2. A left side window of the car has the reference numeral 3 and 4 denote the windshield. The x-patterned structure of the figure illustrates the position of a left inflatable curtain assembly 5, wherein it is shown that the assembly 5 is provided along the top edge of the side window 3 and is curved close to the A-pillar 6 and continues in a direction along the top edge of the windshield 4 a portion of the length of the windshield.

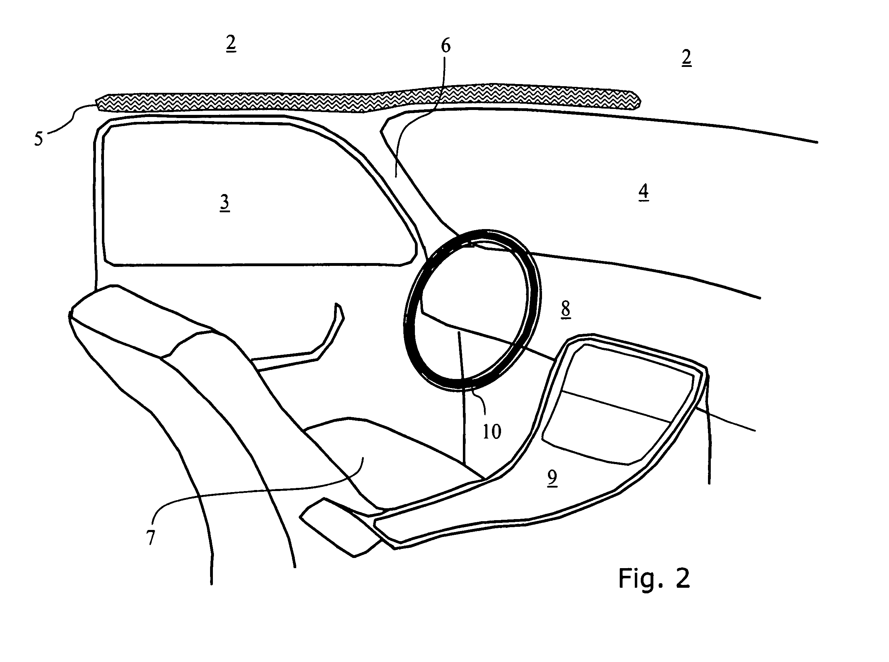

Figure 2 shows the interior of the car compartment in a direction towards the corner between the side window 3 and the windshield 4 close to the driver's seat 7. In the compartment of the car, there is further illustrated a dashboard 8 extending along the lower edge of the windshield 4 inside the car compartment and facing the occupants of the car. The A-pillar 6 is a post connecting the roof 2 with the body of the car 1 and extends downwards in the direction towards the dashboard 8 and forms a borderline between the side window 3 and the windshield 4. A console 9 for displays and equipment of the car is shown adjacent to the seat 7. A steering wheel 10 is further schematically shown in front of the seat 7.

Further, in figure 2 the inflatable curtain assembly 5 is shown in its stored position as a wave formed pattern. In the example it is disclosed an embodiment where the inflatable curtain assembly 5 is housed in the car compartment along a line of the roof. The part of said roofline wherein the inflatable curtain assembly is stored is herein called a front corner roofline part defined as including:
- at least a portion of a first interface between the upper edge of a front side window 3 and the roof 2,
- a bend in the vicinity of the top of the A-pillar,
- less than half the length of a second interface between the upper edge of the windshield 4 and the roof 2

An inflatable curtain assembly 5 is stored in such defined front corner roofline part.

The term side window used herein defines the window on the left or right side of the car, close to a front seat of the car, at least extending approximately from the A-pillar to a line in the window substantially parallel to the backrest of a said front seat.

The bend of the assembly 5 referred to may be ground 90 degrees but depends on the design of the roof 2, the windshield 4 and the side window 3 in the area where these objects connect each other.

In one embodiment, the curtain assembly 5 is in its folded position arranged behind a panel along a so called cant rail of the car above the side window 3 and is further arranged behind a panel along the so called front header above the windshield 4. Said covering panels hiding the stored inflatable curtain assembly in its unfolded position may be provided with fractural; e.g. a recess, on the inside of said panel surface to facilitate the penetration of the panel in case of a release of the inflatable curtain assembly.

The inflatable curtain assembly is inflated by means of a gas generating inflator being in fluid communication with said inflatable curtain assembly and wherein said inflator is triggered to inflate curtain or curtains of the assembly upon a signal from a crash detector.

In one embodiment the inflatable curtain assembly consists of two or more separately inflatable curtains to cooperating to perform the same function as the only one curtain in a one-curtian assembly according to the object of the present invention. This may be achieved in many ways. The separate curtains may be connected by connecting means, like straps, belts, a piece of texture or any foldable sheet. The separate curtains may further be inflated by means of a common gas inflator, triggered by the same triggering device When two or more inflatable curtains are included in the assembly, they are interconnected to form an integral shield consisting of said for forming a continuing shield along the side window and the adjacent portion of the windshield.

The assembly may further be composed of two or more separate curtains overlapping each other. Said separate curtains are preferably triggered by the same triggering means. A more expensive solution is to use separate triggering means for separate curtains.

In still a further embodiment the at least one inflatable curtain is divided into two or more sections, which are each inflated according to predetermined characteristics.

In still another embodiment the at least one curtain in the curtain assembly is provided with only one chamber.

In still a further embodiment the at least one curtain in the curtain assembly is provided with a multiple of chambers, wherein the chambers are separated from each other by means of partition walls.

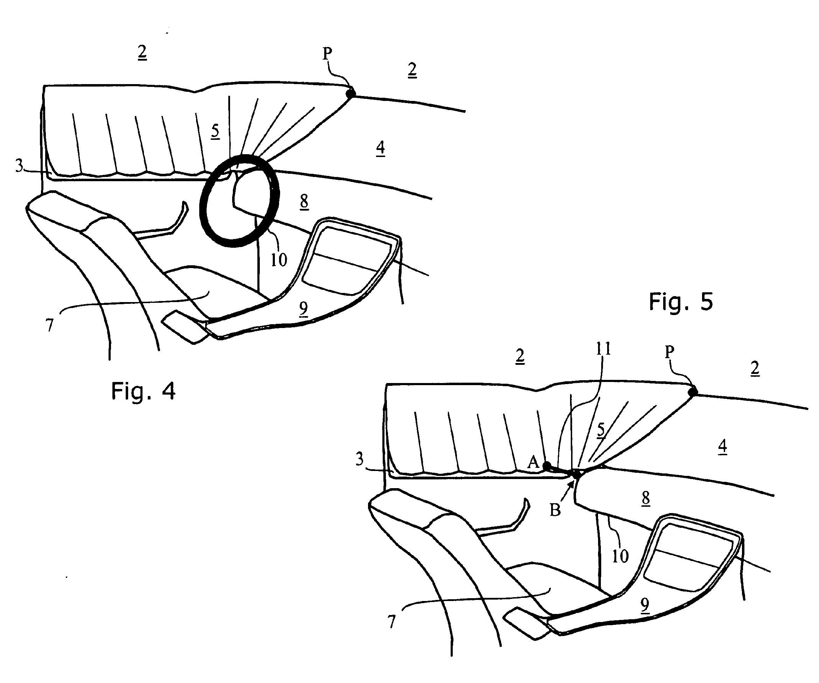

A further embodiment of the invention is illustrated in figure 4, wherein the Inflatable curtain assembly extends from the A pillar a distance s (see fig. 1) along said second interface to a point P. Said distance s to the point P is less than half the length of the upper edge of the windshield. In the embodiment as illustrated in figure 4 the inflatable curtain, assembly unfolds within an outer limit being a line from said point P to the lower end of the A-pillar when it is inflated.

In an alternative embodiment according to the invention at least one curtain included in the curtain assembly is provided with two or more layers, wherein one side of the curtain is a layer of higher stiffness than the rest of the layers.

In an alternative embodiment of the invention at least one curtain included in the curtain assembly is roll folded when it is in its folded position. Roll folded means that the curtain is rolled up, when it is in the stored position.

In an alternative embodiment of the invention at least one curtain included in the curtain assembly is z-folded. By z-folded means that the curtain(s) is folded one or more times or that it is pleated in bellow folds. Alternatively the curtain(s) may be packed partly roll folded and partly z-folded. As an example of the latter embodiment a curtain is roll folded in its outer part and z-folded in its inner part.

In still an alternative embodiment of the invention at least one area of the inflatable curtain assembly is provided with a see through mesh, which is located such that it will be in a line of sight for a driver of the car when the curtain assembly is unfolded. This mesh is a safety provision to help the driver to see through the inflated curtain, if it has unfolded from some undesired reason or to allow a driver to control and steer the car during or shortly after a collision moment.

If more exact control of the unfolding movement of the inflatable curtain of the assembly is desired, a strap 11 can be attached between a point A on a lower part of a curtain of the inflatable curtain assembly, preferably in the region of the bend of the curtain, and a point B at a low point on the A-pillar. Point B could be anywhere else on the car structure close to the region where the curtain assembly in its unfolded position bends from along the side window to the direction along the windshield. This measure may be taken to ensure that the curtain inflates and unfolds down as far as a predetermined distance and that the curtain bends from along the side window and substantially in parallel to the windshield in its lower edge. Such an attach point A is shown in figure 5, wherein the steering wheel 10 is removed for the sake of clarity. In figure 5 the said strap is used in an embodiment where the lower part of the frontal curtain part is Inclined in the direction from point P to the lower part of the A-pillar, but said strap or more than one strap fixed to the car body may be used as a complement to the assembly in any of the embodiments discussed.

In some of the figures there is only given an example of an inflatable curtain assembly provided for the protection of an occupant seated in the drivers place. Of course an identical assembly is, or may be, arranged for the occupant in the front passenger seat.

It is an overall object of the present invention to provide a shield also in the corner between the side window and the adjacent windshield. The purpose of the use of separate curtains is that the curtains are arranged to cooperate to form an integral shield.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps, which perform substantially the same function in substantially the same way to achieve the same results, be within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Car with a Device for the protection of a human inside the car (1) during a crash and said device comprising an inflatable curtain assembly (5), wherein the car (1) includes: a windshield (4), a side window (3), the upper edges of said windshield (4) and said side window (3) adjoining a roof (2) of the car (1), a dashboard (8) inside the car along the lower edge of the windshield (4), an A-pillar (6) extending from the roof (2) down to said dashboard (8) and positioned between said windshield (4) and said side window (3), whereby
- said inflatable curtain assembly (5) comprises two or more curtains cooperating to perform the same function as only one inflatable curtain,
- said curtains are interconnected by connecting means,
- the inflatable curtain assembly is stored in its folded position along a first interface of the roof (2) and the side window (3) and continuing along a portion of a second interface of the roof (2) and the windshield (4), the curtain assembly (5) being bent in the vicinity of an upper end of the A-pillar (6), such that the two or more curtains in their inflated position are unfolded to form an integral shield downwards from said portion of said second interface towards the dashboard (8) in that the human thus has a protection in case of collisions between body parts and hard structures in the region of said side window (3), said portion of the windshield (4) and an area there between during the crash, **characterised in that** :
- said curtains are separately inflatable, and
- said integral shield is also formed from said first interface downwards along the side window (3) such that it covers the side window.

2. The car according to claim 1, wherein the two or more separately inflatable curtains are inflated by means of a gas generating inflator being in fluid communication with said separately inflatable curtains and wherein said inflator is triggered to inflate the assembly upon a signal from a crash detector.

3. The car according to claim 1, wherein the two or more separately inflatable curtains are inflated by means of a gas generating inflator being in fluid communication with said separately inflatable curtains and wherein said inflator is triggered by separate triggering means for separate curtains of the assembly upon a signal from a crash detector.

4. The car according to claim 1, wherein the inflatable curtains in there inflated position form an integral shield consisting of said curtains forming a continuing shield along the side window (3) and the adjacent portion of the windshield (4).

5. The car according to any of the preceding claims*,* wherein the inflatable curtains are connected by foldable means, like straps, belts, a texture, a foldable sheet.

6. The car according to any of the preceding claims, wherein the inflatable curtains, in their inflated state, are separate curtains overlapping each other in the region of said side window (3) and said portion of the windshield (4).

7. The car according to any of the preceding claims, wherein an inflatable curtain is divided into two or more sections, which are each inflatable according to predetermined characteristics.

8. The car according to any of the preceding claims, wherein the inflatable curtain assembly (5) extends from the A-pillar (6) a distance s along said second interface to a point P.

9. The car according to claim 8, wherein said inflatable curtain assembly (5) is unfoldable within an outer limit being a line from said point P to the lower end of the A-pillar when it is inflated.

10. The car according to claim 8 or 9, wherein said distance s is less than half of the length of the upper edge of the windshield (4).

11. The car according to any of the preceding claims, wherein at least one curtain included in the curtain assembly (5) is provided with only one chamber.

12. The car according to any of claims 1 to 10, wherein at least one curtain included in the curtain assembly (5) is provided with a multiple of chambers.

13. The car according to any of claims 1 to 10, wherein at least one curtain included in the curtain assembly (5) is provided with two or more layers.

14. The car according to claim 13, wherein one side of the curtain is provided with a layer having a Higher stiffness than the rest of the layers.

15. The car according to any of the preceding claims, wherein at least one curtain included in the curtain assembly (5) is roll folded or z-folded or any combination of roll folded and z-folded.

16. The car according to any of the preceding claims, wherein at least one area of the at least one curtain of the inflatable curtain assembly (5) is provided with a see through mesh, which is located such that it will be in a line of sight for a driver of the car (1) when the curtain assembly (5) is unfolded.

17. The car according to any of the preceding claims, wherein a strap (11) is attached between a point (A) on a lower part of a curtain of the inflatable curtain assembly (5) and a point on the dashboard (8) in the region where the curtain assembly (5) in its unfolded position is bent from along the side window (3) to the direction along the windshield (4).

18. The car according to any of the preceding claims, wherein the curtain assembly (5) is in its folded position is arranged at the cant rall of the car above the side window 3 and is further arranged at the front header above the windshield 4.

19. Method for the protection of a human inside a car (1) during a crash, wherein the car (1) includes: a windshield (4), a side window (3), the upper edges of said windshield and said side window adjoining a roof (2) of the car (1), a dashboard (8) along the lower edge of the windshield (4) inside the car (1), an A-pillar (6) extending from the roof (2) down to said dashboard (8) and positioned between said windshield (4) and said side window (3), **characterized in that** the method comprising the steps of:
- storing, along a roofline curve including a first interface of the roof (2) and the side window (3), a bend at the upper part of the A-pillar (6) and a portion of a second interface of the roof (2) and the windshield (4), an inflatable curtain assembly (5) including two or more separately inflatable curtains cooperating to perform the same function as only one inflatable curtain,
- interconnecting said separately inflatable curtains by connecting means,
- inflating said two or more separately inflatable curtains at the crash,
- arranging said two or more separately inflatable curtains to unfold downwards along the side window (3) to form an integral shield from said first interface along the side window (3), until they cover the side window and downwards from said second interface towards the dashboard (8) and
- arranging said two or more separately inflatable curtains to form an integral shield also in the region between the side window (3) and the adjacent windshield (4).

20. The method according to claim 19, further comprising the step of:
- connecting said separately inflatable curtains of the inflatable curtain assembly by any connecting means from the group of: straps, belts, a texture, a foldable sheet.

## Patentansprüche

1. Fahrzeug mit einer Vorrichtung für den Schutz eines Menschen in dem Fahrzeug (1) bei einem Zusammenstoß, wobei die Vorrichtung eine aufblasbare Vorhangbaueinheit (5) umfasst, wobei das Fahrzeug (1) aufweist: eine Windschutzscheibe (4), ein Seitenfenster (3), wobei die Oberkanten der Windschutzscheibe (4) und des Seitenfensters (3) an ein Dach (2) des Fahrzeugs (1) angrenzen, ein Armaturenbrett (8) innerhalb des Fahrzeugs längs der Unterkante der Windschutzscheibe (4), eine A-Säule (6), die sich von dem Dach (2) nach unten zu dem Armaturenbrett (8) erstreckt und zwischen der Windschutzscheibe (4) und dem Fenster (3) angeordnet ist, wobei
- die aufblasbare Vorhangbaueinheit (5) zwei oder mehr Vorhänge umfasst, die zusammenwirken, um die gleiche Funktion wie nur ein einziger aufblasbarer Vorhang zu erfüllen,
- die Vorhänge durch Verbindungsmittel miteinander verbunden sind,
- die aufblasbare Vorhangbaueinheit in ihrer zusammengefalteten Position längs einer ersten Grenzfläche zwischen dem Dach (2) und dem Seitenfenster (3), die sich längs eines Abschnitts einer zweiten Grenzfläche zwischen dem Dach (2) und der Windschutzscheibe (4) fortsetzt, untergebracht ist, wobei die Vorhangbaueinheit (5) in der Umgebung eines oberen Endes der A-Säule (6) gebogen ist, derart, dass die zwei oder mehr Vorhänge in ihrer aufgeblasenen Position entfaltet sind, um eine einteilige Abschirmung von dem Abschnitt der zweiten Grenzfläche nach unten zu dem Armaturenbrett (8) zu bilden, so dass der Mensch im Fall von Zusammenstößen mit Karosserieteilen und harten Strukturen im Bereich des Seitenfensters (3), des Abschnitts der Windschutzscheibe (4) und eines Bereichs dazwischen während des Zusammenstoßes einen Schutz hat,
**dadurch gekennzeichnet, dass**:
- die Vorhänge getrennt aufblasbar sind und
- die einteilige Abschirmung außerdem von der ersten Grenzfläche nach unten längs des Seitenfensters (3) gebildet ist, derart, dass sie das Seitenfenster abdeckt.

2. Fahrzeug nach Anspruch 1, bei dem die zwei oder mehr getrennt aufblasbaren Vorhänge mittels einer Gaserzeugungs-Aufblaseiiirichtung aufgeblasen werden, die mit den getrennt aufblasbaren Vorhängen in einer Fluidverbindung steht, und bei dem die Aufblaseinrichtung durch ein Signal von einem Crash-Detektor ausgelöst wird, µm die Baueinheit aufzublasen.

3. Fahrzeug nach Anspruch 1, bei dem die zwei oder mehr getrennt aufblasbaren Vorhänge mittels einer Gaserzeugungs-Aufblaseinrichtung aufgeblasen werden, die mit den getrennt aufblasbaren Vorhängen in einer Fluidverbindung steht, und bei dem die Aufblaseinrichtung durch ein Signal von einem Crash-Detektor durch getrennte Auslösemittel für getrennte Vorhänge der Baueinheit ausgelöst wird.

4. Fahrzeug nach Anspruch 1, bei dem die aufblasbaren Vorhänge in ihrer aufgeblasenen Position eine einteilige Abschirmung bilden, die aus den Vorhängen besteht, die eine ununterbrochene Abschirmung längs des Seitenfensters (3) und des benachbarten Abschnitts der Windschutzscheibe (4) bilden.

5. Fahrzeug nach einem der vorhergehenden Ansprüche, bei dem die aufblasbaren Vorhänge durch faltbare Mittel wie etwa Bänder, Riemen, ein Gewebe und eine faltbare Platte verbunden sind.

6. Fahrzeug nach einem der vorhergehenden Ansprüche, bei dem die aufblasbaren Vorhänge in ihrem aufgeblasenen Zustand getrennte Vorhänge sind, die im Bereich des Seitenfensters (3) und des Abschnitts der Windschutzscheibe (4) miteinander überlappen,

7. Fahrzeug nach einem der vorhergehenden Ansprüche, bei dem ein aufblasbarer Vorhang in zwei oder mehr Abschnitte unterteilt ist, die jeweils in Übereinstimmung mit vorgegebenen Charakteristiken aufblasbar sind.

8. Fahrzeug nach einem der vorhergehenden Ansprüche, bei dem sich die aufblasbare Vorhangbaueinheit (5) von der A-Säule (6) über eine Strecke s längs der zweiten Grenzfläche zu einem Punkt P erstreckt.

9. Fahrzeug nach Anspruch 8, bei dem die aufblasbare Vorhangbaueinheit (5) innerhalb einer äußeren Grenze entfaltbar ist, die durch eine Linie von dem Punkt P zu dem unteren Ende der A-Säule gegeben ist, wenn sie aufgeblasen wird.

10. Fahrzeug nach Anspruch 8 oder 9, bei dem die Strecke s kleiner als die halbe Länge der Oberkante der Windschutzscheibe (4) ist.

11. Fahrzeug nach einem der vorhergehenden Ansprüche, bei dem wenigstens ein in der Vorhangbaueinheit (5) enthaltener Vorhang mit nur einer Kammer versehen ist.

12. Fahrzeug nach einem der Ansprüche 1 bis 10, bei dem wenigstens ein in der Vorhangbaueinheit (5) enthaltener Vorhang mit mehreren Kammern versehen ist.

13. Fahrzeug nach einem der Ansprüche 1 bis 10, bei dem wenigstens ein in der Vorhangbaueinheit (5) enthaltener Vorhang mit zwei oder mehr Lagen versehen ist.

14. Fahrzeug nach Anspruch 13, bei dem eine Seite des Vorhangs mit einer Lage versehen ist, die eine höhere Steifigkeit als der Rest der Lagen besitzt.

15. Fahrzeug nach einem der vorhergehenden Ansprüche, bei dem wenigstens ein in der Vorhangbaueinheit (5) enthaltener Vorhang aufgerollt gefaltet oder z-gefaltet ist oder gemäß irgendeiner Kombination aus aufgerollt gefaltet und z-gefaltet gefaltet ist.

16. Fahrzeug nach einem der vorhergehenden Ansprüche, bei dem wenigstens ein Bereich des wenigstens einen Vorhangs der aufblasbaren Vorhangbaueinheit (5) mit einem durchsichtigen Netz versehen ist, das so angeordnet ist, dass es sich in einer Sichtlinie für einen Fahrer des Fahrzeugs (1) befindet, wenn die Vorhangbaueinheit (5) entfaltet ist.

17. Fahrzeug nach einem der vorhergehenden Ansprüche, bei dem ein Band (11) zwischen einem Punkt A an einem unteren Teil eines Vorhangs der aufblasbaren Vorhangbaueinheit (5) und einem Punkt an dem Armaturenbrett (8) in dem Bereich, in dem die Vorhangbaueinheit (5) in ihrer entfalteten Position längs des Seitenfensters (3) in Richtung zu der Windschutzscheibe (4) gebogen ist, befestigt ist.

18. Fahrzeug nach einem der vorhergehenden Ansprüche, bei dem die Vorhangbaueinheit (5) in ihrer gefalteten Position an der schrägen Schiene des Fahrzeugs über dem Seitenfenster (3) angeordnet ist und ferner im vorderen Kopfbereich oberhalb der Windschutzscheibe (4) angeordnet ist,

19. Verfahren für den Schutz eines Menschen in einem Fahrzeug (1) bei einem Zusammenstoß, wobei das Fahrzeug (1) umfasst: eine Windschutzscheibe (4), ein Seitenfenster (3), wobei die Oberkanten der Windschutzscheibe und des Seitenfensters an ein Dach (2) des Fahrzeugs (1) angrenzen, ein Armaturenbrett (8) längs der Unterkante der Windschutzscheibe (4) im Fahrzeug (1) und eine A-Säule (6), die sich von dem Dach (2) nach unten zu dem Armaturenbrett (8) erstreckt und zwischen der Windschutzscheibe (4) und dem Seitenfenster (3) angeordnet ist, **dadurch gekennzeichnet, dass** das Verfahren die folgenden Schritte umfasst:
- Aufbewahren einer aufblasbaren Vorhangbaueinheit (5), die zwei oder mehr getrennt aufblasbare Vorhänge enthält, die zusammenwirken, um die gleiche Funktion wie nur ein einziger aufblasbarer Vorhang auszuführen, längs einer Dachlinienkurve, die eine erste Grenzfläche zwischen dem Dach (2) und dem Seitenfenster (3), eine Biegung im oberen Teil der A-Säule (6) und einen Abschnitt einer zweiten Grenzfläche zwischen dem Dach (2) und der Windschutzscheibe (4) enthält,
- Verbinden der getrennt aufblasbaren Vorhänge miteinander durch Verbindungsmittel,
- Aufblasen der zwei oder mehr getrennt aufblasbaren Vorhänge bei dem Zusammenstoß,
- Anordnen der zwei oder mehr getrennt aufblasbaren Vorhänge, damit sie sich längs des Seitenfensters (3) nach unten entfalten, um eine einteilige Abschirmung von der ersten Grenzfläche längs des Seitenfensters (3) zu bilden, bis sie das Seitenfenster abdecken, und von der zweiten Grenzfläche nach unten zu dem Armaturenbrett (8), und
- Anordnen der zwei oder mehr getrennt aufblasbaren Vorhänge, um eine einteilige Abschirmung auch in dem Bereich zwischen dem Seitenfenster (3) und der angrenzenden Windschutzscheibe (4) zu bilden.

20. Verfahren nach Anspruch 19, das ferner den folgenden Schritt umfasst:
- Verbinden der getrennt aufblasbaren Vorhänge der aufblasbaren Vorhangbaueinheit durch irgendein Verbindungsmittel aus der folgenden Gruppe: Bänder, Riemen, ein Gewebe, eine faltbare Platte.

## Revendications

1. Automobile munie d'un dispositif pour la protection d'un être humain situé à l'intérieur de l'automobile (1) pendant une collision, et ledit dispositif comportant un ensemble formant rideau gonflable (5), dans laquelle l'automobile (1) comporte : un pare-brise (4), une fenêtre latérale (3), les bords supérieurs dudit pare-brise (4) et de ladite fenêtre latérale (3) rejoignant un toit (2) de l'automobile (1), un tableau de bord (8) à l'intérieur de l'automobile le long du bord inférieur du pare-brise (4), un pilier en A (6) s'étendant à partir du toit (2) vers le bas jusqu'audit tableau de bord (8) et positionné entre ledit pare-brise (4) et ladite fenêtre latérale (3), de sorte que
- ledit ensemble formant rideau gonflable (5) comporte deux rideaux ou plus coopérant pour remplir la même fonction qu'un seul rideau gonflable,
- lesdits rideaux sont interconnectés par des moyens de connexion,
- l'ensemble formant rideau gonflable est stocké dans sa position pliée le long d'une première interface du toit (2) et de la fenêtre latérale (3), et en continuant le long d'une partie d'une seconde interface du toit (2) et du pare-brise (4), l'ensemble formant rideau (5) étant incurvé à proximité d'une extrémité supérieure du pilier en A (6), de sorte que les deux rideaux ou plus dans leur position gonflée, sont dépliés pour former une protection intégrale vers le bas à partir de ladite partie de ladite seconde interface vers le tableau de bord (8), de sorte que l'être humain a ainsi une protection en cas de collisions entre des parties du corps et des structures dures dans la zone de ladite fenêtre latérale (3), de ladite partie du pare-brise (4) et d'une surface entre celles-ci pendant la collision, **caractérisée en ce que** :
- lesdits rideaux sont gonflables séparément, et
- ladite protection intégrale est également formée à partir de ladite première interface vers le bas le long de la fenêtre latérale (3), de telle sorte qu'elle couvre la fenêtre latérale.

2. Automobile selon la revendication 1, dans laquelle les deux rideaux gonflables séparément ou plus sont gonflés par l'intermédiaire d'un gonfleur générateur de gaz qui est en communication de fluide avec lesdits rideaux gonflables séparément, et dans laquelle ledit gonfleur est déclenché pour gonfler l'ensemble à partir d'un signal provenant d'un détecteur de collision.

3. Automobile selon la revendication 1, dans laquelle les deux rideaux gonflables séparément ou plus sont gonflés par l'intermédiaire d'un gonfleur générateur de gaz qui est en communication de fluide avec lesdits rideaux gonflables séparément, et dans laquelle ledit gonfleur est déclenché par des moyens de déclenchement séparés pour des rideaux séparés de l'ensemble à partir d'un signal provenant d'un détecteur de collision.

4. Automobile selon la revendication 1, dans laquelle les rideaux gonflables, dans leur position gonflée, forment une protection intégrale constituée desdits rideaux formant une protection continue le long de la fenêtre latérale (3) et de la partie adjacente du pare-brise (4).

5. Automobile selon l'une quelconque des revendications précédentes, dans laquelle les rideaux gonflables sont reliés par des moyens pliables, comme des sangles, des ceintures, une texture, une feuille pliable.

6. Automobile selon l'une quelconque des revendications précédentes, dans laquelle les rideaux gonflables, dans leur état gonflé, sont des rideaux séparés se chevauchant l'un l'autre dans la zone de ladite fenêtre latérale (3) et de ladite partie du pare-brise (4).

7. Automobile selon l'une quelconque des revendications précédentes, dans laquelle un rideau gonflable est divisé en deux tronçons ou plus, qui sont chacun gonflables selon des caractéristiques prédéterminées.

8. Automobile selon l'une quelconque des revendications précédentes, dans laquelle l'ensemble formant rideau gonflable (5) s'étend à partir du pilier en A (6) sur une distance s le long de ladite seconde interface, vers un point P.

9. Automobile selon la revendication 8, dans laquelle ledit ensemble formant rideau gonflable (5) est dépliable dans une limite extérieure qui est une ligne à partir dudit point P vers l'extrémité inférieure du pilier en A lorsqu'il est gonflé.

10. Automobile selon la revendication 8 ou 9, dans laquelle ladite distance s est inférieure à la moitié de la longueur du bord supérieur du pare-brise (4).

11. Automobile selon l'une quelconque des revendications précédentes, dans laquelle au moins un rideau inclus dans l'ensemble formant rideau (5) est muni d'une seule chambre.

12. Automobile selon l'une quelconque des revendications 1 à 10, dans laquelle au moins un rideau inclus dans l'ensemble formant rideau (5) est muni d'une multitude de chambres.

13. Automobile selon l'une quelconque des revendications 1 à 10, dans laquelle au moins un rideau inclus dans l'ensemble formant rideau (5) est muni de deux couches ou plus.

14. Automobile selon la revendication 13, dans laquelle un côté du rideau est muni d'une couche ayant une rigidité supérieure au reste des couches.

15. Automobile selon l'une quelconque des revendications précédentes, dans laquelle au moins un rideau inclus dans l'ensemble formant rideau (5) est plié en rouleau ou plié en z, ou en n'importe quelle combinaison de pliage en rouleau et pliage en z.

16. Automobile selon l'une quelconque des revendications précédentes, dans laquelle au moins une zone du au moins un rideau de l'ensemble formant rideau gonflable (5) est muni d'un treillis à travers lequel on voit, qui est positionné de sorte qu'il sera dans la ligne de vision pour un conducteur de l'automobile (1.) lorsque l'ensemble formant rideau (5) est déplié.

17. Automobile selon l'une quelconque des revendications précédentes, dans laquelle une sangle (11) est fixée entre un point (A) sur une partie inférieure d'un rideau de l'ensemble formant rideau gonflable (5) et un point sur le tableau de bord (8) dans la zone où l'ensemble formant rideau (5), dans sa position dépliée, est incurvé à partir du long de la fenêtre latérale (3) dans la direction le long du pare-brise (4).

18. Automobile selon l'une quelconque des revendications précédentes, dans laquelle l'ensemble formant rideau (5), dans sa position pliée, est agencé au niveau du rail en dévers de l'automobile au-dessus de la fenêtre latérale (3), et est en outre agencé au niveau du collecteur avant au-dessus du pare-brise (4).

19. Procédé pour la protection d'un être humain situé à l'intérieur d'une automobile (1) pendant une collision, dans lequel l'automobile (1) comporte : un pare-brise (4), une fenêtre latérale (3), les bords supérieurs dudit pare-brise et de ladite fenêtre latérale rejoignant un toit (2) de l'automobile (1), un tableau de bord (8) le long du bord inférieur du pare-brise (4) à l'intérieur de l'automobile (1), un pilier en A (6) s'étendant à partir du toit (2) vers le bas jusqu'audit tableau de bord (8) et positionné entre ledit pare-brise (4) et ladite fenêtre latérale (3), **caractérisé en ce que** le procédé comporte les étapes consistant à :
- stocker, le long d'une courbe de ligne de toit comportant une première interface du toit (2) et de la fenêtre latérale (3), une courbure au niveau de la partie supérieure du pilier en A (6) et d'une partie d'une seconde interface du toit (2) et du pare-brise (4), un ensemble formant rideau gonflable (5) comportant deux rideaux gonflables séparément, ou plus, coopérant pour remplir la même fonction qu'un seul rideau gonflable,
- interconnecter lesdits rideaux gonflables séparément par des moyens de connexion,
- gonfler lesdits deux rideaux gonflables séparément, ou plus, au moment de la collision,
- agencer lesdits deux rideaux gonflables séparément, ou plus, pour un dépliage vers le bas le long de la fenêtre latérale (3), afin de former une protection intégrale à partir de ladite première interface le long de la fenêtre latérale (3) jusqu'à ce qu'ils couvrent la fenêtre latérale, et vers le bas à partir de ladite seconde interface vers le tableau de bord (8), et
- agencer lesdits deux rideaux gonflables séparément, ou plus, pour former une protection intégrale également dans la zone entre la fenêtre latérale (3) et le pare-brise adjacent (4).

20. Procédé selon la revendication 19, comportant en outre l'étape consistant à :
connecter lesdits rideaux gonflables séparément de l'ensemble formant rideau gonflable par l'intermédiaire de quelconques moyens de connexion dans le groupe comprenant des sangles, des ceintures, une texture, une feuille pliable.
